(19) Europäisches Patentamt
European Patent Office
Office européen des brevets

(11) Veröffentlichungsnummer: **0 000 732**
**B1**

(12) **EUROPÄISCHE PATENTSCHRIFT**

(21) Anmeldenummer: **78100509.5**

(22) Anmeldetag: **26.07.78**

(51) Int. Cl.³: **C 08 L 81/06**, C 08 J 5/18

# (54) Abmischungen von verzweigtem Polyarylsulfon-Polycarbonat sowie ihre Verwendung zur Herstellung von Extrusionsfolien

(30) Priorität: **0.4.08.77 DE 2735092**
**0.9.12.77 DE 2755026**

(43) Veröffentlichungstag der Anmeldung:
**21.02.79 Patentblatt 79/04**

(45) Bekanntmachung des Hinweises auf die Patenterteilung:
**23.07.80 Patentblatt 80/15**

(84) Benannte Vertragsstaaten:
**DE FR GB NL**

(56) Entgegenhaltungen:
**Keine**

(73) Patentinhaber: **Bayer AG**
**Zentralbereich Patente, Marken und Lizenzen**
**D - 5090 Leverkusen 1, Bayerwerk (DE)**

(72) Erfinder: **Binsack, Rudolf, Dr.**
**Bethelstrasse 4a**
**D - 4150 Krefeld (DE)**
**Reese, Eckart, Dr.**
**Aggerstrasse 22**
**D - 4047 Dormagen (DE)**
**Wank, Joachim, Ing. grad.**
**Zuelpicher Strasse 7**
**D - 4047 Dormagen (DE)**

**EP 0 000 732 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Abmischungen von verzweigtem Polyarylsulfon-Polycarbonat sowie ihre Verwendung zur Herstellung von Extrusionsfolien

Gegenstand der vorliegenden Erfindung sind Polyarylsulfon-Polycarbonat-Abmischungen aus 95 Gew.-% bis 30 Gew.-% verzweigtem Polyarylsulfon und 5 Gew.-% bis 70 Gew.-% Polycarbonat mit einem $\overline{M}w$ (Gewichtsmittelmolekulargewicht) größer 60 000.

Vorzugsweise liegt das Mischungsverhältnis zwischen 90 Gew.-% bis 60 Gew.-% an Polyarylsulfon und zwischen 10 Gew.-% und 40 Gew.-% an Polycarbonat.

Insbesondere liegt das Mischungsverhältnis zwischen 85 Gew.-% bis 70 Gew.-% an Polyarylsulfon und zwischen 15 Gew.-% und 30 Gew.-% an Polycarbonat.

Mischungen aus linearen Polyarylläthersulfonen und Polycarbonaten sind bereits beschrieben (siehe DT—OS 1 719 244 und US—PS 3 365 517); ebenfalls ihre Verwendung zur Herstellung von Folien (Seite 21 der DT—OS 1 719 244).

Durch diese Mischungen sollen einerseits die unerwünschte Belastungsversprödung der Polyaryläthersulfone und adererseits die Spannungsrißanfälligkeit der Polycarbonate gegenüber Lösungsmitteln behoben werden (Seite 2 der DT—OS).

Derartige Mischungen können für die Herstellung von Gießfolien verwendet werden (Beispiele 8 und 9 der DT—OS sowie 14 und 16 von US—PS). In den genannten Literaturstellen sind als Polycarbonate die üblicherweise für Spritzguß und Extrusion geeigneten Polycarbonate angegeben, deren $\overline{M}w$ beispielsweise etwa 35000 beträgt (Beispiel 2 der DT—OS). Folien aus derartigen Mischungen besitzen jedoch eine starke Neigung zu Spannungsrißkorrosion.

Wird die in der DT—OS 1 719 244 bzw. US—PS 3 365 517 beschriebene Polycarbonatkomponente mit einem $\overline{M}w$ von 35 000 durch ein hochmolekulares, ohne Molekulargewichtsabbau nicht extrudierbares Polycarbonat ersetzt und aus derartigen Mischungen Gießfolien hergestellt, zeigen diese Produkte ebenfalls eine starke Neigung zu Spannungsrißkorrosion sowie mangelhafte mechanische Eigenschaftswerte.

Demgegenüber war es überraschend, daß die erfindungsgemäßen Polyarylsulfon-Polycarbonat-Abmischungen Extrusionsfolien mit einem ausgezeichneten Eigenschaftsbild liefern, obwohl sie als Polycarbonatkomponente ein ohne Molekulargewichtsabbau nicht extrudierbares Polycarbonat enthalten.

Erfindungsgemäß geeignete verzweigte Polyarylsulfone sind insbesondere die verzweigten Polyaryläthersulfone gemäß US—PS 3 960 815 bzw. DT—OS 2 305 413, deren $\overline{M}w$ (Gewichtsmittelmolekulargewicht, gemessen beispielsweise mittels Lichtstreuung) zwischen etwa 15000 und etwa 55000, vorzugsweise zwischen etwa 20000 und 40000 liegen. Gemäß dieser DT—OS 2 305 413 werden diese Polyaryläthersulfone hergestellt.

Die verzweigten aromatischen Polyaryläthersulfone haben somit zweibindige Strukturelemente der Formel I

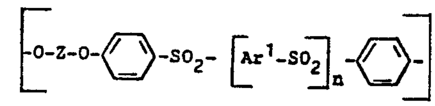 (I)

worin $Ar^1$ einen Biphenylen-oder Oxybisphenylen-Rest bedeinlet, n 0 oder 1 ist, Z einen p-Phenylenrest, m-Phenylenrest oder zweibindigen Rest der folgenden Formel (II)

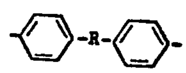 (II)

entspricht, wobei R einen zweiwertigen $C_1$—$C_{12}$-Alkylen-bzw. Alkyliden-Rest, $C_3$—$C_{12}$-Cydoalkylen-bzw. Cycloalkyliden-Rest, $C_7$—$C_{12}$-Aralkylen-bzw. Aralkyliden-Rest oder $C_8$—$C_{12}$-Arylenbisalkyliden-Rest oder die Grüppierüng

—O—, —S—, —SO—, —$SO_2$—, —CO—

bzw. eine einfache Bindüng bedeület.

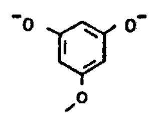
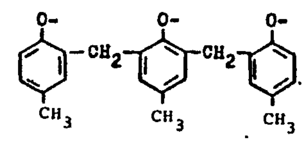
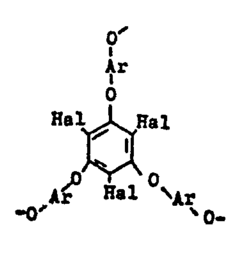
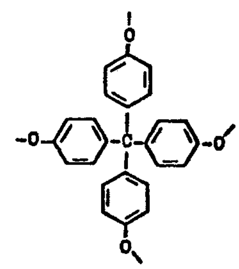
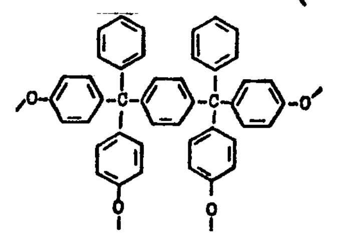
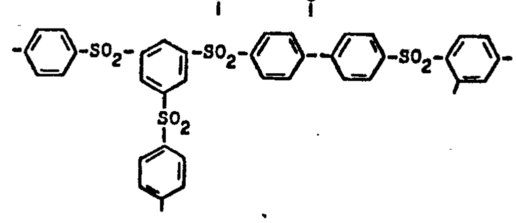

Die Definition der Symbole Hal und Ar in einer dieser Formeln entspricht Chlor oder Brom beziehungsweise einem ein- oder mehrkernigen, zweiwertigen aromatischen Rest.

Erfindungsgemäß geeignete Polycarbonate sind die armoatischen Homopolycarbonate und aromatische Copolycarbonate, denen z.B. ein oder mehrere der folgenden Diphenole zugrunde liegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfoxide
Bis-(hydroxyphenyl)-sulfone
$\alpha,\alpha'$ - Bis - (hydroxyphenyl) - diisopropylbenzole

sowie deren kernalkylierte und kernhalogenierte Verbindungen. Diese und weitere geeignete Diphenole sind z.B. in der US-Patentschrift 3 028 365 und in der Monographie "H. Schnell, Chemistry and Physics of Polycarbonates, Interscience Publishers, New York, 1964" beschrieben.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0.05 und 2.0 Mol-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347 und 2 500 092, der britischen Patentschrift 1 079 821 und der US-Patentschrift 3 544 514 beschrieben. beschrieben.

Die Gewichtsmittelmolekulargewichte der erfindungsgemäß geeigneten Polycarbonate sollen über 60000, vorzugsweise zwischen 65000 und 120000 und insbesondere zwischen 75000 und 95000 liegen. (Ermittelt aus der Intrinsic-Viskosität, gemessen in $CH_2Cl_2$-Lösung).

Aromatische Polycarbonate im Sinne der Erfindung sind insbesondere Homopolycarbonate aus Bis - 2 - (4-hydroxyphenol)-propan (Bisphenol-A) sowie Copolycarbonate aus mindestens 30 Mol-% vorzugsweise mindestens 60 Mol-% und insbesondere mindestens 80 Mol-% an Bisphenol A und bis zu 70 Mol-%, vorzugsweise bis zu 40 Mol-% und insbesondere bis zu 20 Mol-% aus anderen Diphenolen. (Die Molprozente beziehen sich jeweils auf Gesamtmolmenge an einkondensierten Diphenolen).

Als andere Diphenole sind andere Bis-(hydroxyaryl)-$C_1$—$C_8$-alkane als Bisphenol A sowie Bis-(hydroxyaryl)-$C_5$—$C_6$-cycloalkane geeignet, insbesondere Bis-(4-hydroxyphenyl)-$C_1$—$C_8$-alkane und Bis-(4-hydroxyphenol)-$C_5$—$C_6$-cycloalkane.

Als andere Diphenole sind beispielsweise
Bis-(4)hydroxyphenyl)-methan (Bisphenol F),
2,4-Bis-(4-hydroxyphenyl)-butan,
1,1-Bis-(4-hydroxyphenyl)-cyclohexan,
2,2-Bis-(3-methyl-4-hydroxyphenyl)-propan,
Bis-(3,5-dimethyl-4-hydroxyphenyl)-methan,
2,2 - Bis - (3,5 - dimethyl - 4 - hydroxyphenyl)-propan
2,4 - Bis - (3,5-dimethyl - 4 - hydroxyphenyl)-2-methylbutan und
1,1 - Bis - (3,5-dimethyl - 4 - hydroxyphenyl)-cyclohexan geeignet.

Erfindungsgemäß bevorzugte Copolycarbonate enthalten Bisphenol A und 1,1 - Bis - (4-hydroxyphenyl)-cyclohexan (Bisphenol Z).

Die erfindungsgemäßen Polyarylsulfon-Polycarbonat-Abmishungen können nach folgenden vier Verfahren hergestellt werden:

1. Durch gemiensames Aufschmelzen des Polycarbonats und des Polyarylsulfons unter gleichzeitiger oder nachfolgender inniger Vermischung der Schmelze und anschließender Extrusions der homogenisierten Schmelze in einer geeigneten Apparatur.
2. Durch Aufschmelzen des Polyarylsulfons in einer geeigneten Apparatur und Eindosierung des Polycarbonats in die Schmelze des Polyarylsulfons, Homogenisierung und anschließende Extrusion des Gemisches in einer geeigneten Apparatur.
3. Durch Mischen der Lösungen des Polycarbonats und des Polyarylsulfons, Ausdampfen des Lösungsmittels unter Aufschmelzen der Mischung und gleichzeitige Extrusion.
4. Durch Zumischen einer Lösung des Polycarbonats zur Schmelze des Polyarlysulfons, Ausdampfen des Lösungsmittels unter Aufschmelzen des Polycarbonats, Homogenisierung der Schmelze und anschließende Extrusion in einer geeigneten Apparatur.

Bevorzugte Mischungsverfahren sind die Verfahren 2 bis 4, besonders bevorzugt ist das Mischungsverfahren 4.

Als geeignete Apparaturen für die Herstellung der erfindungsgemäßen Abmischungen sind Walzen, Knetund Schneckenmaschinen zu verstehen. Bevorzugte Apparaturen sind Schneckenmachinen, insbesondere Zweiwellenschneckenmaschinen.

Die Herstellung der Extrusionsfolien aus den erfindungsgemäßen Abmischungen kann in bekannter Weise z.B. auf normalen, dem Stand der Technik gemäßen eingängigen Dreizonenschnecken erfolgen, wobei die Vorformung zu Folien sowohl über Breitschlitzdüsen zu Fachfolien, als auch über Folienblasköpfen zu Blasfolien erfolgen kann.

Die erfindungsgemäßen Extrusionsfolien haben ein besonders vorteilhaftes Eigenschaftsbild, was sie beispielsweise für die Verwendung auf dem Elektrosektor geeignet macht.

Unter anderem besitzen die erfindungsgemäßen Extrusionsfolien eine hohe mechanische Festigkeit, eine hohe Beständigkeit gegen Spannungsrißkorrosion in der Hitze und gegenüber organischen Flüssigkeiten, eine hohe Wärmeformbeständigkeit und Dauerwärmebeständigkeit. Insbesondere sind sie durch ihre Beständigkeit gegen ungesättigte Polyesterharzlösungen ausgezeichnet.

Den erfindungsgemäßen Abmischungen können noch die in der Polycarbonat- und Polysulfon-Chemie bekannten Additive bzw. Füllstoffe zugesetzt werden.

Erwähnt seien in diesem Zusammenhang beispielsweise Farbstoffe, Pigmente, Entformungsmittel, Stabilisatoren gegen Feuchtigkeits-, Hitze- und UV-Einwirkung, Gleitmittel, Füllstoffe, wie Glaspulver, Quarzerzeugnisse, Graphit, Molybdänsulfid, Metallpulver, Pulver höherschmelzender Kunststoffe, z.B. Polytetrafluoräthylenpulver, natürliche Fasern, wie Baumwolle, Sisal und Asbest, ferner Glasfasern der verschiedensten Art, Metallfäden sowie währen des Verweilens in der Schmelze der Polycarbonate stabile und die Polycarbonate nicht merklich schädigende Fasern.

Beispiel 1

80 Gew.-% eines verzweigten Polyarylsulfons, das durch Umsetzen von 0,25 Mol 2,2 - Bis - (4-hydroxyphenyl)-propan, mit 0,0025 Mol 2.6 - Bis - (2'-hydroxy-5'-methylbenzyl) - 4 - methyl-phenol und 0,25375 Mol 4,4'-Dichlordiphenylsulfon hergestellt wurde (s. US—PS 3,960,815 Beispeil 1), mit einem $\overline{M}_w$ von 30.000 und 20 Gew.-% eines Polycarbonates auf Basis Bisphenol A mit einem $\overline{M}_w$ von 95.000 werden zusammen in einer 2-Wellenschnecke aufgeschmolzen, wobei die Zylindertemperaturen 340°C betragen. Die Schmelze wird als Strang ausgepreßt. Der Strang wird gekühlt und granuliert.

Das erhaltene Granulat wird auf einer Einwellenschnecke mit Entagsungszone aufgeschmolzen, und die Schmelze über eine Breitschlitzdüse ausgedrückt und über eine Chill-Roll-Anlage zu ca. 40 $\mu$m dicken Folien abgezogen. Die erhaltenen Eigenschaftswerte sind in nachfolgender Tabelle aufgeführt.

Beispiel 2

Herstellung von Folien gem. Beispiel 1, jedoch unter Verwendung von 70 Gew.-% eines verzweigten Polyarylsulfons gem. Beispiel 1 und 30 Gew.-% eines Bisphenol-A-Polycarbonates, dessen $\overline{M}_w$ 75.000 beträgt. Die Eigenschaftswerte der erhaltenen Folie sind in nachfolgender Tabelle aufgeführt.

Beispiel 3
(Vergleichsbeispiel)

Die Polymeren gem. Beispiel 1 wurden gemeinsam in Methylenchlorid gelöst, wobei die Konzentration der Polymermischung in Methylenchlorid 17 Gew.-% beträgt. Die Lösung wurde nach Filtrieren und Entgasen in bekannter Weise auf Trommelgießmaschinen zu ca. 40$\mu$m dicken Folien vergossen. Zur Entfernung des Restgehaltes an Lösungsmitteln wurde die erhaltene Folie bei 120°C nachgetrocknet. Die Eigenschaftswerte der Folie sind in nachfolgender Tabelle aufgeführt.

Beispiel 4
(Vergleichsbeispiel)

Aus 80 Gew.-% eines verzweigten Polysulfons gem. Beispiel 1 und 20 Gew.-% eines Bisphenol-A-Polycarbonats, dessen $\overline{M}_w$ 30.00 beträgt, wird ein Granulat gem. Beispiel 1 hergestellt und auf einer Einwellenschnecke mit Blaskopf zu ca. 60$\mu$m dicken Folien verarbeitet.

Die Zylindertemperaturen betrugen in der Einzugszone 280°C und in den folgenden Zonen 310°C. Die Düsentemperatur wurde ebenfalls auf 310°C eingestellt. Der Düsenspalt betrug 0,8 mm. Der Schlauch wurde im Verhältnis 1 : 4 aufgeweitet. Die Abzugsgeschwindigkeit des Folienwicklers wurde so eingestellt, daß bei den gewählten Schneckendrehzahlen die gewünschte Foliendicke von 60$\mu$m erhalten wurde. Die Eigenschaftswerte der erhaltenen Folie sind in beiliegender Tabelle aufgeführt.

TABELLE

| | Folie gemäß Beispielen | | | | Folien aus | |
|---|---|---|---|---|---|---|
| | 1 | 2 | 3 | 4 | 100 % Polysulfon gemäß Beispiel 1 | 100 % Polycarbonat $\bar{M}_w$ 30.000 |
| Zugfestigkeit (DIN 53455) (MPa) | 95 | 105 | 85 | 80 | 100 | 10 |
| Reißdehnung (DIN 53 455) (%) | 110 | 110 | 90 | 100 | 100 | 120 |
| Reißdehnung n. losec. Lagerung in Toluol /n-Propanol 1:3 (%) | 110 | 110 | 15 | 15 | 15 | 3 |
| Beständigkeit gegenüber ungesättigten Polyesterharzen | beständig | beständig | nicht beständig | nicht beständig | nicht beständig | nicht beständig |
| Wärmeformbeständigkeit (VDE 0345 ∫ 25) (°C) | 192 | 193 | 185 | 178 | 194 | 155 |
| Dauerwärmebeständigkeit (VDE 0304, Teil 2) | 158 | 156 | 142 | 140 | 155 | 136 |

Ausgangsprodukte

*Beispiel zur Herstellung eines verweigten Polysulfons mit einem Trisphenolzusatz von 1 Mol-%*

57,075 g (0,25 Mol) 2,2 - Bis - (4-hydroxyphenyl)-Propan und 0,871 g (0.0025 Mol) 2.6 - Bis - (2'-hydroxy-5'-methylbenzyl) - 4 - methyl-phenol werden in ein Metallgefäß eingewogen und in 500 ml Dimethlysulfoxid gelöst. Das Gefäß wird mit einem Gaseinleiterungsrohr, einem Rührwerk, einem Thermometer, einem Rückflußkühler und einer mit Toluol gefüllten Wasserauffangvorrichtung versehen. Dann wird ein langsamer Stickstoffstrom durch die Apparatur geleitet, um eine Inertgasatmosphäre zu erzeugen. Es werden 20,03 g (0,5 + 0,0075 Mol) Natriumhydroxid in fester Form oder als konzentrierte wässrige Lösung hinzugefügt un nach dem Lösen des Natriumhydroxids 150 ml Toluol eingetropft. Das so erhaltene Reaktionsgemisch wird 6 Stunden auf eine Temperatur von 140 — 150°C erhitzt, wobei das im Reaktionsgemisch enthaltene und das bei der Phenolatbildung entstehende Wasser kontinuierlich mit dem Toluol als Azeotrop in die Wasserauffangvorrichtung destilliert wird und sich dort abscheidet, während das Toluol wieder in das Reaktionsgemisch zurückläuft. Ist alles Wasser aus dem reaktionssystem entfernt, leert man das Wasserauffanggefäß, destilliert das Toluol ab und gibt bei einer Temperatur von 120 — 140°C eine Lösung von 72,882 g (0,25 + 0,00375 Mol) 4,4'-Dichlordiphenylsulfon in 100 ml wasserfreiem Dimethylsulfoxid hinzu. Dann erhitzt man unter Rühren allmählich auf eine Reaktionstemperatur von 150°C. Bei dieser Temperatur beläßt man die Reaktionsmischung 6 Stunden, wobei sich das bei der Kondensation entstehende Natriumchlorid schnell abscheidet. Nach Beendigung der Reaktion wird die abgekühlte Polymerlösung in schnell gerührtes Wasser eingetragen, wobei sich das erhaltene Polyaryläthersulfon in fester Form abscheidet. Es wird abgenutscht, sorgfältig gewaschen und unter Vakuum getrocknet. Zur Reinigung wird das erhaltene Polysulfon in Methylenchlorid gelöst, filtriert und in einen Übershuß schnell gerührten Methanols gegossen. Dabei scheidet sich das Polysulfon in weißen Flocken ab. Es wird abgenutscht und getrocknet.

**Patentansprüche**

1. Polyarylsulfon-Polycarbonat-Abmischungen aus 95 Gew.-% bis 30 Gew.-% verzweigten Polyarylsulfon und aus 5 Gew.-% bis 70 Gew.-% Polycarbonat mit einem $\overline{M}w$ (Gewichtsmittelmolekulargewicht) größer 60 000.

2. Abmischungen gemäß Anspruch 1, dadurch gekennzeichnet, daß das $\overline{M}w$ der Polycarbonatkomponente zwischen 65 000 und 120 000 liegt.

3. Abmischungen gemäß Anspruch 1, dadurch gekennzeichnet, daß das $\overline{M}w$ der Polycarbonatkomponente zwischen 75 000 und 95 000 liegt.

4. Abmischungen gemäß Ansprüche 1 bis3, dadurch gekennzeichnet, daß sie 90 Gew.-% bis 60 Gew.-% verzweigtes Polyarylsulfon und 10 Gew.-% bis 40 Gew.-% Polycarbonat enthalten.

5. Abmischungen gemäß Ansprüche 1 bis 3, dadurch gekennzeichnet, daß sie 85 Gew.-% bis 70 Gew.-% an Polyarylsulfon und zwischen 15 Gew.-% und 30 Gew.-% an Polycarbonat enthalten.

6. Verwendung der Abmischungen gemäß Ansprüche 1 bis 5 zur Herstellung von Extrusionsfolien.

7. Extrusionsfolien erhältlich aus den Abmischungen der Ansprüche 1 bis 5.

**Claims**

1. Polyaryl-sulphone/polycarbonate mistures comprising 95% by weight to 30% by weight of a branched polyaryl-sulphone and 5% by weight to 70% by weight of a polycarbonate with a $\overline{M}w$ (weight-average molecular weight) greater than 60,000.

2. Abmischungen gemäß Anspruch 1, daed in that the $\overline{M}w$ of the polycarbonate component is between 65,000 and 120,000.

3. Mixtures according to claim 1, characterised in that the $\overline{M}w$ of the polycarbonate component is between 75,000 and 95,000.

4. Abmischungen gemäß Ansprüche 1 bis 3, characterised in that they contain 90% by weight to 60% by weight of a branched polyaryl-sulphone and 10% by weight to 40% by weight of a polycarbonate.

5. Mixtures according to claims 1 to 3, characterised in that they contain 85% by weight to 70% by weight of a polyaryl-sulphone and between 15% by weight and 30% by weight of a polycarbonate.

6. The use of the mixtures according to claims 1 to 5 for the production of extruded films.

7. Extruded films obtainable from the mixtures of claims 1 to 5.

**Revendications**

1. Mélanges polycarbonate-polyarylsulfone consistant en 95 à 30 % en poids de polyarylsulfone ramifiée et 5 à 70 % en poids d'un polycarbonate présentant un poids moléculaire moyen $\overline{M}w$ (moyenne en poids) supérieur à 60 000.

2. Mélanges selon la revendication 1, caractérisés en ce que le poids moléculaire $\overline{M}w$ du composant polycarbonate se situe entre 65 000 et 120 000.

3. Mélanges selon la revendication 1, caractérisés en ce que le poids moléculaire $\overline{M}w$ du composant polycarbonate se situe entre 75 000 et 95 000.

4. Mélanges selon les revendications 1 à 3,

caractérisés en ce qu'ils contiennent de 90 à 60 % en poids de polyarylsulfone ramifiée et de 10 à 40 % en poids de polycarbonate.

5. Mélanges selon les revendications 1 à 3, caractérisés en ce qu'ils continnent de 85 à 70 % en poids de polyarylsulfone et de 15 à 30 % en poids de polycarbonate.

6. Utilisation des mélanges selon les revendications 1 à 5 pour la préparation de feuilles extrudées.

7. Feulles extrudées obtenues à partir des mélanges des revendications 1 à 5.